**Europäisches Patentamt**

**European Patent Office**

**Office européen des brevets**

(19)

(11) Veröffentlichungsnummer: **0 044 884**
**B1**

(12)

# EUROPÄISCHE PATENTSCHRIFT

(45) Veröffentlichungstag der Patentschrift:
**18.05.83**

(21) Anmeldenummer: **80107559.9**

(22) Anmeldetag: **03.12.80**

(51) Int. Cl.³: **C 04 B 35/52,** H 05 B 7/085,
F 27 D 11/10

(54) Kohlenstoffelektrode, insbesondere Graphitelektrode zur Stahlerzeugung.

(30) Priorität: **25.07.80 DE 3028348**

(43) Veröffentlichungstag der Anmeldung:
**03.02.82 Patentblatt 82/5**

(45) Bekanntmachung des Hinweises auf die Patenterteilung:
**18.05.83 Patentblatt 83/20**

(84) Benannte Vertragsstaaten:
**AT BE CH FR GB IT LI LU NL SE**

(56) Entgegenhaltungen:
**DE-A-1 646 679**
**DE-A-2 251 590**
**DE-A-2 347 147**
**DE-A-2 600 169**

(73) Patentinhaber: **C. CONRADTY NÜRNBERG GmbH & Co
KG, Grünthal 1-6, D-8505 Röthenbach a.d. Pegnitz (DE)**

(72) Erfinder: **Schieber, Franz, Haimendorf Nr. 94,
D-8505 Röthenbach a.d.Pegnitz (DE)**
Erfinder: **Mayer, Dieter, Lindenstrasse 2b,
D-8540 Schwabach (DE)**

(74) Vertreter: **Tischer, Herbert, Dipl.-Ing. et al,
Patentanwälte Dipl.-Ing. Herbert Tischer Dipl.-Ing.
Wolfgang Kern Albert-Rosshaupter-Strasse 65,
D-8000 München 70 (DE)**

Kohlenstoffelektrode, insbesondere Graphitelektrode zur Stahlerzeugung

Die Erfindung betrifft eine Kohlenstoffelektrode, insbesondere Graphitelektrode zur Stahlerzeugung, mit einer metallhaltigen Beschichtung zur Erhöhung der elektrischen Leitfähigkeit und/oder zur Verringerung des Oxidationsverlustes der seitlichen Elektrodenoberfläche.

Zur Verringerung der Oberflächenoxidation von Graphitelektroden und damit zur Herabsetzung des Seitenverbrauchs des heissen Elektrodenstranges sind metallhaltige Schutzüberzüge entwickelt worden, die beispielsweise aus Carbiden, Siliziden, Oxiden, Metallen oder Kombinationen solcher Stoffe bestehen und auf die Elektrodenoberfläche durch Aufspritzen und nachfolgendes Einbrennen mit elektrischem Lichtbogen aufgebracht werden, wodurch sie mit der Elektrodenoberfläche fest verbunden werden.

Besonders bewährt hat sich in diesem Zusammenhang ein aus Aluminium und Siliziumcarbid bestehender Überzug. Nach dem Aufbringen des Überzugs, dem sogenannten «Coatieren», weist die Graphitelektrode eine metallische, rauhe Beschichtung auf, deren Leitfähigkeit nahezu der des Aluminiums entspricht und die durch die vorangegangene Lichtbogenbehandlung fest auf der Graphitoberfläche haftet. Der Schutzüberzug wird ab etwa 500°C leicht plastisch, so dass er dann seine Gasdichtheit erreicht. Mit steigender Temperatur wird er unterhalb der Elektrodenfassung nach und nach in Oxid umgewandelt, wobei er aber seine Schutzfunktion beibehält.

Dem mit derartigen beschichteten Graphitelektroden erreichten Vorteil der Verringerung des chemischen Seitenverbrauchs, also des seitlichen Abbrandes steht ein wesentlicher Nachteil gegenüber, der sich dadurch ergibt, dass die Elektrodenfassung bezüglich des Werkstoffes den Erfordernissen der metallischen Coating-Oberfläche angeglichen werden muss und auch die Ofendeckendurchführung muss so gestaltet werden, dass der Überzug nicht abgeschabt wird. Zur Vermeidung der Verschmelzung der üblicherweise aus Kupfer bestehenden Kontaktbacken mit dem metallischen Überzug der Graphitelektrode sind die Kupferkontakte durch solche aus Graphit zu ersetzen. Des weiteren hat sich als notwendig erwiesen, einen gut wirkenden Abdichtring für jede Elektrode zu verwenden, damit stärkere Verunreinigungen des Überzugs und der Kontakte vermieden werden.

Derartige beim Übergang auf gecoatete Elektroden erforderliche Ofenumbauten sind mit erheblichen Kosten verbunden.

Die Aufgabe der Erfindung besteht deshalb darin, die Kohlenstoffelektrode, insbesondere Graphitelektrode der genannten Art so auszubilden, dass die Verwendung solcher Elektroden für Elektrostahlöfen herkömmlicher Konstruktion möglich ist, ohne dass die Öfen in der oben beschriebenen Weise umgebaut werden müssen.

Zur Lösung dieser Aufgabe wird erfindungsgemäss vorgeschlagen, zur Vermeidung des Verschmelzens der Kontaktbacken mit der metallischen Schutzschicht die seitlichen Oberflächen mit einem graphithaltigen Material zu bedecken, das aus einem Gemisch aus Graphitpulver, einem aushärtbaren Kunstharz und einem wasserlöslichen Kleber gebildet ist und das, gemäss einer vorteilhaften Ausgestaltung der Erfindung, aus einem Gemisch aus 700 Teilen Graphitpulver mit einer Körnung kleiner als 1000 μm, 100 bis 400 Teilen eines aushärtbaren Kunstharzes, 20 bis 80 Teilen eines wasserlöslichen Klebers und Wasser bestehen kann, wobei sich als Kunstharz ein Harz auf Phenol-Novolakhexamethylentetramin-Basis besonders bewährt hat und als Kleber ein Polyvinylalkohol besonders geeignet ist.

Die mittlere Dicke der Schicht aus graphithaltigem Material beträgt zweckmässigerweise 0,1 bis 2,0 mm, wodurch unter anderem gewährleistet ist, dass Staubteilchen, die sich auf den Backenoberflächen ablagern, beim hydraulischen Andrücken der Backen an die Elektrodenoberfläche in das graphithaltige Material eingebettet werden und dadurch den elektrischen Kontakt nicht nachteilig beeinflussen.

Das die metallhaltige Oberfläche bedeckende graphithaltige Material kann eine Schicht bilden, die auf der metallhaltigen Oberfläche festhaftet, beispielsweise aufgespritzt oder aufgepinselt ist. Es besteht aber auch die Möglichkeit, die durch die Verwendung des graphithaltigen Materials im Bereich der Kontaktbacken gewonnenen Vorteile mit einer Materialschicht zu verwirklichen, die nicht vollständig fest auf der metallhaltigen Oberfläche haftet oder sogar nur lose auf ihr aufliegt, beispielsweise in Form einer Folie.

Die Verwendung der graphithaltigen Materialschicht auf der metallischen Elektrodenoberfläche hat nicht nur den Vorteil der vollständigen oder zumindest teilweisen Vermeidung sonst erforderlicher Ofenumbauten, sondern lässt auch den Einsatz von Kontaktbacken aus Kupfer zu, wie er bei unbeschichteten Graphitelektroden üblich ist.

Es ist nun zwar aus DE-A 22 51 590 bekannt geworden, bei einem Verfahren zur Herstellung von Schutzüberzügen auf Gegenständen aus Kohlenstoff auf eine mit Aluminium beschichtete Elektrodenoberfläche Graphit als wärmebeständiges Material aufzusprühen, jedoch dient diese Massnahme nur zur Erhöhung des Schmelzpunktes des Coatings. Der Graphit wird nach dem Aufsprühen zu diesem Zweck mit dem Aluminium mit Hilfe eines elektrischen Lichtbogens verschmolzen. Die gleiche Massnahme ist bei einem Verfahren zur Herstellung von aluminiumhaltigen Schutzüberzügen auf Kohlenstofferzeugnissen bekannt (DE-B 1 646 679), wobei auf das auf den Kohlenstoffgegenstand aufgespritzte Aluminium ein Aufstrich aus Graphit aufgetragen wird, der unmittelbar danach einer Bearbeitung im elektrischen Lichtbogenofen ausgesetzt wird, woraufhin die Oberfläche der so erzeugten Beschich-. tung geschliffen wird.

Mit diesen bekannten Massnahmen ist die Beseitigung der bei Verwendung der mit der üblichen metallischen Schutzüberzügen versehenen Graphitelektroden im Hinblick auf den erforderlichen Ofenumbau auftretenden Nachteile weder beabsichtigt noch nahegelegt.

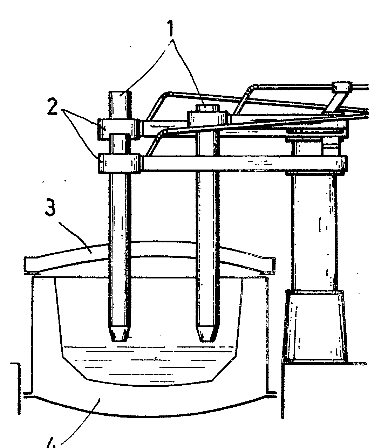

Die Erfindung wird nachfolgend anhand eines Ausführungsbeispiels unter Bezugnahme auf die Zeichnung näher erläutert, die schematisch in Seitenansicht einen mit Elektroden der erfindungsgemässen Art bestückten Lichtbogenofen zeigt.

Durch den Deckel 3 des Lichtbogenofens 4 ragen in an sich bekannter Weise die Elektroden 1, die durch Kontaktbacken 2 gehaltert sind, welche hydraulisch an die Elektrodenoberfläche angepresst werden. In einem solchen Ofen ist der Schutzüberzug der Elektroden sehr schweren Betriebsverhältnissen ausgesetzt, weil beim Sauerstoffeinblasen Schlacke bis zum Ofendeckel spritzt und die Elektrodenoberfläche bedeckt. Trotz einer guten Abdichtung der Elektroden bei ihrem Durchgang durch den Deckel mit Hilfe bekannter Abdichtungsvorrichtungen ist eine gewisse Verschmutzung der Elektrodenoberfläche im Bereich der Kontaktbacken 2 oftmals nicht vollständig auszuschliessen. Da jedoch das auf den metallhaltigen Schutzüberzug in einer Schichtdicke von etwa 0,1 bis 2,0 mm aufgebrachte graphithaltige Material eine gewisse Duktilität besitzt, können die hydraulischen Kontaktbacken, welche aus Kupfer bestehen, die Schmutzteilchen im Bereich ihrer Anpressflächen in das graphithaltige Material hineindrükken, wodurch nachteilige Auswirkungen auf den Übergangswiderstand zwischen Backe und Elektrode vermieden werden. Ein Verschweissen zwischen Backen und dem graphithaltigen Material findet nicht statt, so dass die Backen in der üblichen Weise aus Kupfer bestehen können und das Lösen der Kontaktbacken von der Elektrodenoberfläche zwecks Nachführung des Elektrodenstrangs keine Schwierigkeiten bereitet.

Das graphithaltige Material wird aus einer trockenen Mischung aus etwa 700 Teilen Graphitpulver, beispielsweise Ceylon-Graphitpulver, mit einer Teilchengrösse kleiner als 1000 μm, insbesondere kleiner als 63 μm und 100 bis 400, beispielsweise 150 Teilen eines aushärtbaren Kunstharzes, beispielsweise eines fein gemahlenen Harzes auf Phenol-Novolakhexamethylentetramin-Basis und 20 bis 80 Teilen eines wasserlöslichen Klebers, beispielsweise 30 Teilen eines handelsüblichen Polyvinylalkohols, hergestellt.

Dieses Pulvergemisch wird in Wasser suspendiert bzw. gelöst, so dass eine streich- oder spritzfähige Paste entsteht.

Eine mit einem Aluminiumüberzug versehene Graphitelektrode mit 355 mm Durchmesser und 2000 mm Länge wird mit dieser Suspension mehrfach bestrichen, wobei zwischen jedem Bestreichungsvorgang eine Lufttrocknung stattfindet und sich schliesslich eine mittlere Beschichtungsdicke des graphithaltigen Materials von 0,1 bis 1,0 mm ergibt.

Die luftgetrocknete graphithaltige gesamte Materialschicht wird dann auf 150 bis 180°C kurzzeitig erhitzt, um das Harz zu kondensieren.

Das obige Herstellungsbeispiel für die erfindungsgemässe Elektrode ist weitgehend abwandelbar, insbesondere was die Zusammensetzung des graphithaltigen Materials anbelangt, jedoch auch im Hinblick auf das Aufbringen des Materials, das anstatt durch Aufstreichen oder Aufpinseln beispielsweise auch durch Aufspritzen auf die mit einem metallhaltigen Überzug versehene Graphitelektrode erfolgen kann.

Die fertige Elektrode lässt sich direkt in die normalen Backen 2 eines Lichtbogenschmelzofens zur Stahlerzeugung, wie in der Zeichnung dargestellt, einsetzen und führt zu keinerlei Verschweissen zwischen ihrer Oberfläche und dem Kontakt der Backen, der beispielsweise aus Kupfer besteht.

Durch das Aufstreichen oder Aufpinseln, aber auch Aufspritzen des graphithaltigen Materials auf die Elektrodenoberfläche wird das Material in den Unebenheiten des metallischen Coatings fest verankert.

Es ist jedoch auch denkbar, die metallhaltige Elektrodenoberfläche in einer Weise mit dem graphithaltigen Material zu bedecken, bei der zwischen dem Material und der Oberfläche keine durchgehende mechanisch feste Verbindung bzw. keine dauerhafte Verbindung dieser Art hergestellt wird, also dann nur eine zeitweilige, beispielsweise mit Hilfe einer um die Elektrode gewickelten Folie aus graphithaltigem Material.

Durch die erfindungsgemässe Elektrode wird somit sichergestellt, dass die bekannten und weitgehend bereits verwendeten mit metallischen Schutzüberzügen versehenen Graphitelektroden ohne kostspieligen Aufwand, hervorgerufen durch erforderliche Ofenumbauten, auch in den Lichtbogenöfen verwendet werden können, in denen die bisherigen Graphitelektroden, die die kostspieligen seitlichen Oxidationsverluste erfahren haben, benutzt werden.

**Patentansprüche**

1. Kohlenstoffelektrode, insbesondere Graphitelektrode zur Stahlerzeugung, mit einer metallhaltigen Beschichtung zur Erhöhung der elektrischen Leitfähigkeit und/oder zur Verringerung des Oxidationsverlustes der seitlichen Elektrodenoberfläche, dadurch gekennzeichnet, dass die Elektrodenoberfläche zur Vermeidung der Verschmelzung der Kontaktbacken der Elektrodenfassungen mit der metallhaltigen Schutzschicht mit einem Material beschichtet ist, das aus einem Gemisch aus Graphitpulver, einem aushärtbaren Kunstharz und einem wasserlöslichen Kleber gebildet ist.

2. Kohlenstoffelektrode nach Anspruch 1, dadurch gekennzeichnet, dass das Gemisch 700 Teile Graphitpulver mit einer Körnung kleiner als

1000 µm, 100 bis 400 Teile Kunstharz, 20 bis 80 Teile wasserlöslichen Kleber und Wasser enthält.

3. Kohlenstoffelektrode nach Anspruch 2, dadurch gekennzeichnet, dass das Kunstharz ein Harz auf Phenol-Novolakhexamethylentetramin-Basis ist.

4. Kohlenstoffelektrode nach Anspruch 2 oder 3, dadurch gekennzeichnet, dass der wasserlösliche Kleber ein handelsüblicher Polyvinylalkohol ist.

5. Kohlenstoffelektrode nach einem der Ansprüche 1 bis 4, dadurch gekennzeichnet, dass die mittlere Schichtdicke des graphithaltigen Materials auf der metallhaltigen Oberfläche 0,1 bis 2,0 mm beträgt.

6. Kohlenstoffelektrode nach einem der Ansprüche 1 bis 5, dadurch gekennzeichnet, dass die metallhaltige Schutzschicht überwiegend aus Aluminium besteht.

7. Kohlenstoffelektrode nach einem der Ansprüche 1 bis 6, dadurch gekennzeichnet, dass das die metallhaltige Oberfläche bedeckende graphithaltige Material eine Schicht bildet, die auf der metallhaltigen Oberfläche haftet.

8. Kohlenstoffelektrode nach einem der Ansprüche 1 bis 6, dadurch gekennzeichnet, dass das graphithaltige Material eine Schicht bildet, die auf der metallhaltigen Oberfläche lose aufliegt.

## Claims

1. A carbon electrode, in particular a graphite electrode for producing steel, comprising a metal-containing coating to increase the electrical conductivity and/or to decrease the oxidation loss on the lateral electrode surface, characterized in that the electrode surface is covered by a material, consisting of a mixture of graphite powder, a curable synthetic resin and a water-soluble adhesive in order to avoid fusion of the contact jaws of the electrode holders with the metal-containing protective layer.

2. A carbon electrode as defined in claim 1, characterized in that the mixture contains 700 parts of graphite powder having a grain of less than 1000 µm, 100 to 400 parts of curable synthetic resin, 20 to 80 parts of water-soluble adhesive and water.

3. A carbon electrode as defined in claim 2, characterized in that the synthetic resin is a resin on the basis of phenolnovolak hexamethylene tetramine.

4. A carbon electrode as defined in claims 2 or 3, characterized in that the water-soluble adhesive is a commercial polyvinyl alcohol.

5. A carbon electrode as defined in one of the claims 1 to 4, characterized in that the average layer thickness of the graphite-containing material on the metal-containing surface amounts to from 0.1 to 2.0 mm.

6. A carbon electrode as defined in one of the claims 1 to 5, characterized in that the metal-containing protective layer consists predominantly of aluminium.

7. A carbon electrode as defined in one of the claims 1 to 6, characterized in that the graphite-containing material covering the metal-containing surface forms a layer which adheres to the metal-containings surface.

8. A carbon electrode as defined in one of the claims 1 to 6, characterized in that the graphite-containing material forms a layer which loosely rests on the metal-containing surface.

## Revendications

1. Electrode en carbone et notamment électrode en graphite pour la production de l'acier, avec recouvrement renfermant du métal en vue d'élever la conductivité électrique et/ou de diminuer la perte par oxydation de la surface latérale, caractérisé en ce qu'en vue d'éviter que les mâchoires de contact des montures de l'électrode ne fondent avec la couche protectrice renfermant du métal, la surface de l'électrode est recouverte d'une couche d'une matière constituée par un mélange de poudre de graphite, d'une résine synthétique thermodurcissable et d'une colle soluble dans l'eau.

2. Electrode en carbone suivant la revendication 1, caractérisée en ce que le mélange renferme 700 parties de poudre de graphite d'une granulation inférieure à 1000 µm, 100 à 400 parties de résine synthétique, 20 à 80 parties de colle soluble dans l'eau, et de l'eau.

3. Electrode en carbone suivant la revendication 2, caractérisée en ce que la résine synthétique est à base de phénol-novolachexaméthylènetétramine.

4. Electrode en carbone suivant la revendication 2 ou 3, caractérisée en ce que la colle soluble dans l'eau est un alcool polyvinylique commercial.

5. Electrode en carbone suivant l'une des revendications 1 à 4, caractérisée en ce que l'épaisseur moyenne de la couche de matière graphitique qui se trouve sur la surface renfermant du métal est de 0,1 à 2,0 mm.

6. Electrode en carbone suivant l'une des revendications 1 à 5, caractérisée en ce que la couche protectrice renfermant du métal est principalement constituée par de l'aluminium.

7. Electrode en carbone suivant l'une des revendications 1 à 6, caractérisé en ce que la matière graphitique qui recouvre la surface renfermant du métal constitue une couche qui adhère sur cette surface.

8. Electrode en carbone suivant l'une des revendications 1 à 6, caractérisée en ce que la matière graphitique constitue une couche qui repose librement sur la surface renfermant du métal.